(19) Europäisches Patentamt
European Patent Office
Office européen des brevets

(11) **EP 2 902 584 B1**

(12) **EUROPEAN PATENT SPECIFICATION**

(45) Date of publication and mention
of the grant of the patent:
**17.06.2020 Bulletin 2020/25**

(51) Int Cl.:
***E21B 47/00*** *(2012.01)*

(21) Application number: **15153860.0**

(22) Date of filing: **04.02.2015**

(54) **An offshore pipe monitoring system**

Offshore-Rohrüberwachungssystem

Système de surveillance de canalisation en mer

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2014 GB 201401893**

(43) Date of publication of application:
**05.08.2015 Bulletin 2015/32**

(73) Proprietor: **Aquaterra Energy Limited**
**Norwich, Norfolk NR6 6BF (GB)**

(72) Inventors:
• **Stringer, Nicholas**
**Norwich, Norfolk, NR6 6BF (GB)**
• **Simmonds, Andrew**
**Norwich, Norfolk, NR6 6BF (GB)**
• **Lennon, Bernard, Andrew**
**Norwich, Norfolk, NR6 6BF (GB)**

(74) Representative: **ip21 Ltd**
**Central Formalities Department**
**Lakeside 300**
**Old Chapel Way**
**Broadland Business Park**
**Norwich**
**Norfolk NR7 0WG (GB)**

(56) References cited:
US-A1- 2005 103 123    US-A1- 2006 065 401
US-A1- 2006 230 839    US-A1- 2007 193 363
US-A1- 2008 128 138    US-A1- 2012 016 589

EP 2 902 584 B1

**Description**

Field of the Invention

The invention relates to a monitoring system and method for elongate subsea structures, and in particular a monitoring system for determining the fatigue damage to offshore risers/conductors.

Background to the Invention

US2005103123A discloses a system for measuring parameters of a structure, whereby the system in certain aspects comprises one or more strain gauges, which are locatable on an offshore structure. The system comprises transmission apparatus associated with the strain gauges, for transmitting signals that are indicative of the gauge measurements from the strain gauges to a computer apparatus for the subsequent processing of the signals.
In first aspect, the system includes at least three strain apparatuses for providing the actual strain measurements, and associated computer apparatus for receiving the signals from the transmitting apparatus indicative of the measurements and for determining the bending moment and the bending direction of the structure at each location of the gauge apparatuses;
In a second aspect, the system provides a computer apparatus which is programmed to calculate internal pressure and/or the bending direction of the structure based on the acquired measurements;
In a third aspect, the computer apparatus, which processes the signals from the each strain gauge in real time.
The disadvantage of this system is that multiple strain gauges are required at multiple locations along the pile/conductor, so that more than one fatigue measurement point may be observed. (Page 3, paragraph 0035). Each strain gauge provides information which is indicative of the strain measurements at each gauge location. Therefore, the system cannot determine the fatigue damage along the whole length of the pile or conductor, via the use of a single strain gauge.
US2007193363 A1 discloses another system for measuring parameters of a subsea structure.
US2011088910A discloses a method of monitoring a subsea pipeline system, which connects one or more wells to a floating production system and wherein the pipeline system is at least partially flexible and comprises a continuous optical fibre as a distributed sensor as part of the pipeline system. The sensor being capable of providing a distributed measurement of temperature, vibration, pressure or strain, or any combination thereof. Using the sensor to obtain a distributed measurement of temperature, vibration, pressure and/or strain along at least part of the pipeline system; whereby the sensor is indexed to a length of the pipeline system. The distributed measurement is employed to predict the actual condition of the fluid, the pipeline system and/or the adjacent sea water using a mathematical model.
In a first aspect, the subsea pipeline system for connecting one or more wells to a floating production system, wherein the pipeline system comprises at least one partially flexible pipeline. A continuous optical fibre distributed sensor is installed as part of the pipeline and is capable of providing a distributed measurement of temperature and/or strain. Means for obtaining distributed measurement of temperature, vibration or strain, or combinations thereof, along at least part of the pipeline system and indexed to a length of the pipeline system. Means for using the distributed measurement to manage operations of the system. Preferably, the system comprises means for modelling expected pipeline behaviour using the distributed measurement as an input, and means for using the model behaviour to manage the operation of the system.
The disadvantage of this system is that it is a complex hardware system, which provides a distributed measurement of temperature and/or strain along at least part of the pipeline system. The fibre optic sensor will require a complicated method to install it either internally, or externally, to the pipeline. The fibre optic sensor will also be difficult to maintain and costly to repair within a harsh environment, such as an offshore environment. Furthermore, once the fibre optic sensor has been installed, it cannot be easily reconfigured for another purpose, without at least being decommissioned from the monitored pipeline, and then be subsequently reinstalled back into the pipeline for another application, which can prove to be a costly solution.

Summary of the Invention

In a first independent aspect, the invention provides a monitoring apparatus for an elongate subsea structure, wherein the elongate subsea structure is a riser, the monitoring apparatus comprising a strain gauge secured to said elongate subsea structure at a defined location and which communicates signals indicative of actual strain values experienced by said elongate subsea structure over time to an information processing means which comprises:

- a pre-compiled discretised bending moment variation matrix theoretically derived by computationally intensively analysing the response of a virtual model of said elongate subsea structure when subjected to wave-like forces of varying periods and amplitudes for different tensile loadings,

- an extrapolation means which utilises the discretised bending moment variation matrix in conjunction with said time-varying actual strain values and the known defined location of the monitoring apparatus relative to said structure to provide likely actual values for bending moment variation at a plurality of points along the length of said elongate subsea structure,

thus enabling a determination of the cumulative damage being inflicted on the elongate subsea structure at any of said plurality of points.

Preferably, said information processing means further comprises damage identifying means for translating likely actual bending moment variation at any of a plurality of points along the length of the elongate subsea structure into an equivalent fatigue damage per cycle at any of said plurality of points.

Preferably, said information processing means additionally comprises damage accumulation means for aggregating the equivalent fatigue damage per cycle to provide information indicative sustained damage sustained by said elongate subsea structure over a monitored time duration.

Preferably, the pre-compiled discretised bending moment variation matrix takes the form of a six-dimensional matrix wherein:

- A first matrix dimension relates to wave time period;
- A second matrix dimension relates to wave height (amplitude);
- A third matrix dimension relates to bending moment variation;
- A fourth matrix dimension relates to elevation (subsea depth);
- A fifth matrix dimension relates to offshore pipe tension;
- A sixth matrix dimension relates to water depth.

According to the invention, the pre-compiled bending moment variation matrix makes allowances for variations in depth due to tidal effects, and tension effects in the monitored structure. In this case, the processing means additionally includes enveloping means which creates an envelope of possible bending moment variations at a particular point on the elongate subsea structure remote from the site of the monitoring apparatus by retrieving from the discretised bending moment variation matrix all those possible values of likely actual bending moment variation occurring at the particular point using a number of known parameters which is dimensionally less than that of the discretised bending moment variation matrix and therefore incapable of resulting in an exact solution, and selecting the highest value bending moment variation from said possible values. In certain instances, this may be termed a "unique transfer function".

In essence, the invention allows the monitoring system to account for variations in water depth of any point along the length of the elongate subsea structure. For instance, although it is possible, for any given actual strain value (or rate of change thereof) at a particular time, to determine from the discretised bending moment variation matrix a most likely actual bending moment variation being, at that time, experienced at any point along the length of the elongate structure, the solution is not a unique one, and there are multiple potential values for the likely actual bending moment variation at any particular point along the length of the elongate subsea structure - principally because in practice the actual depth of that particular point, although known, is subject to variations due to tidal, eddy and other subsea effects. This allows for variations in depth by creating an "envelope" of possible values. To explain further, subsea structures are rarely rigid and are thus often flexible to some extent, and subsea conditions often include strong currents, eddys, tidal forces and the like. These subsea forces act directly on the subsea structure such that portions thereof can rise and fall relative to the sea bed and the surface. Of course, the subsea structure will usually be anchored at its ends, and possibly also at some specific points along its length, but between these anchors, the structure will move depending on the extant subsea forces acting on it, and therefore although the position of the monitoring apparatus along the structure may be known, it's exact subsea depth cannot be determined with any great accuracy.

In terms of the broader advantages of the invention, it was previously largely impossible, without providing multiple monitoring apparatuses at specific points along the length of the subsea structure, to determine specifically, at any time, bending moment variation values of any such point. However, by providing a pre-compiled bending moment variation matrix such as described, and using the actual strain gauge signals (to create an "envelope" of possible bending moment variations) to determine bending moment variation values at any point along the length of the structure, it is possible both to make safe and reliable estimates of likely actual bending moment variation at that point, and therefore to eliminate the need for multiple (and very costly) monitoring apparatuses. It is thus possible to determine if the end of life of a particular subsea structure has been reached, and/or provide an estimation of the accumulated damage for the entirety of the structure using only a few (possibly only one) monitoring apparatuses.

It should also be mentioned here that although the present invention is most applicable to subsea structures, conduits and the like, it is equally applicable to non-subsea environments where elongate components under tension (or compression, being merely a negative tension) are employed in pressurized environments and subjected to generally periodically varying forces in that environment.

Preferably the actual strain gauge signals communicated to the information processing apparatus are subjected to a rain flow counting algorithm to eliminate any seemingly random distribution element of those signals, and provide a normalized periodic representation of the strain variation at the defined location where the monitoring apparatus is secured to the elongate subsea structure.

Preferably, said damage identifying means is a Miner-Palmgren algorithm, which quickly and efficiently automatically accumulates bending moment variations into fatigue damage per cycle.

Preferably, said discretised bending moment variation matrix further comprises information indicative of wave heading.

Preferably, said damage accumulation means is provided with static dimensional data for the elongate subsea structure, and in the case where the discretised bending moment variation matrix further comprises information indicative of heading, the output of said damage accumulation means includes some indication of cross-sectional distribution of accumulated damage at any particular point along the length of said structure. Most preferably the elongate subsea structure is of circular or elliptical cross-section, and the damage accumulation means provides some indication of radial distribution of accumulated damage at any point along the length of said sub-sea structure.

Preferably said extrapolation means, an enveloping means, a damage identifying means and damage accumulation means are computer program elements incorporated within one or more computer devices.

Preferably, an apparatus according to any of the preceding claims, wherein said strain gauge consists of an array of four separate strain gauges arranged in quadrangular (preferably square) configuration.

Although not strictly necessary, the provision of 4 separate strain gauges in the monitoring apparatus reduces the mathematical complexity somewhat, as will be seen below. Those skilled in the art will of course immediately recognize that the signals communicated from the strain gauges over time can be converted to the physical conditions, e.g. strains ($\varepsilon$), stresses ($\sigma$), bending moment ($M$), and time-varying versions thereof, to which the defined location on the elongate subsea structure at which the monitoring apparatus is sited, is, at a particular time, being subjected.

Preferably, a structure monitoring apparatus further comprises an information storage means for storing said information indicative of discretised bending moment variation matrix, such as a Secure Digital (SD) memory card. A similar memory device (optionally removable) maybe installed within and/or in communication with an information logging device, which will log information attributes representing the wave characteristics over a period of time.

Preferably, a structure monitoring apparatus further comprising a housing which encloses said apparatus and is attachable to an offshore pipe.

This configuration enables the apparatus to be stored in one location when monitoring an offshore pipe, which minimises footprint of the apparatus when installed on the pipe. Furthermore this configuration provides an apparatus, which is a self-contained unit that can be quickly and easily installed, removed and/or maintained.

In a second independent aspect, the invention provides a method of monitoring an elongate subsea structure to determine the fatigue damage thereto, comprising the steps of:

- communicating signals indicative of actual strain values at a particular defined location along said elongate subsea structure to an information processing means;
- in said information processing means, providing a pre-compiled discretised bending moment variation matrix theoretically derived by computationally intensively analysing the response of a virtual model of said elongate subsea structure when subjected to wave-like forces of varying periods and amplitudes for different tensile loadings,
- converting said signals into values of a physical condition represented thereby and being experienced at said defined location on the elongate subsea structure, at a particular time, and creating a time-varying profile for said physical condition,
- using both the pre-compiled discretised bending moment variation matrix, and the time-varying profile of the physical condition and the known defined location of the apparatus relative to said structure, extrapolating for any particular point on said elongate subsea structure remote from the defined location at which the monitoring apparatus is sited to determine a likely actual value for bending moment variation at that particular point, and
- determining a value of cumulative damage, based on said likely actual bending moment variation, being or having been inflicted on said elongate subsea structure at said particular point.

According to the invention, the method includes the further step of creating an envelope of possible bending moment variations at a particular point on the elongate subsea structure remote from the site of the monitoring apparatus by retrieving from the discretised bending moment variation matrix all those possible values of likely actual bending moment variation occurring at the particular point using a number of known parameters which is dimensionally less than that of the discretised bending moment variation matrix and therefore incapable of resulting in an exact solution, and selecting the highest value bending moment variation from said possible values.

In a yet further preferred embodiment, the method includes the further step of calculating an equivalent fatigue damage per cycle at any particular point along said elongate subsea structure by translating the likely actual bending moment value into a damage per cycle value.

Further preferably, the method includes the further step of aggregating the equivalent fatigue damage per cycle to provide information indicative sustained damage sustained by said elongate subsea structure over a monitored time duration.

Brief Description of the Figures

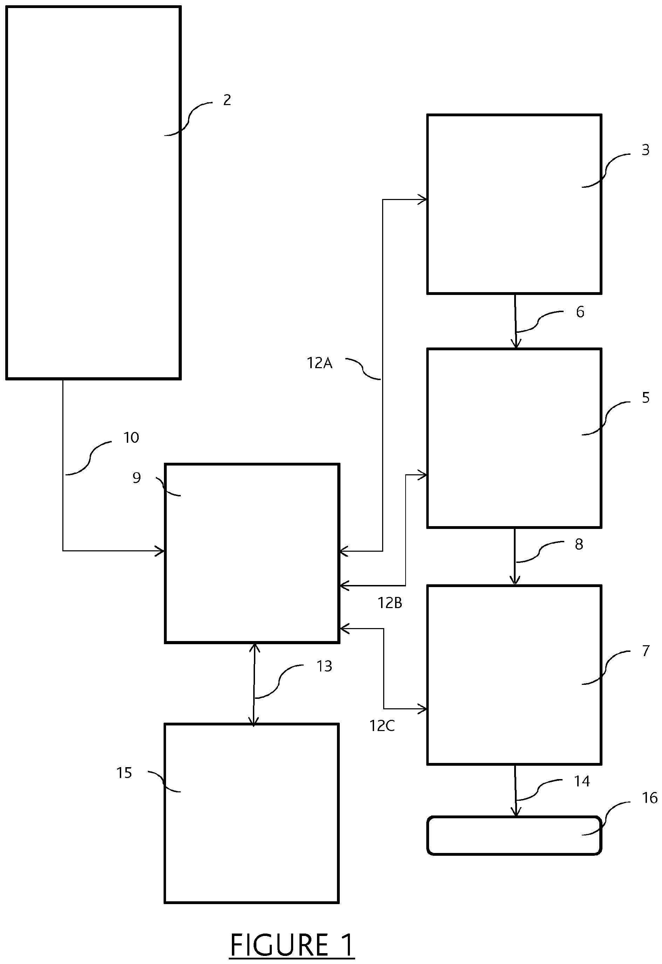

Figure 1 shows an overall block diagram of the monitoring system

Detailed description of the Figures

Figure 1 is a top level block diagram that represents the functional blocks of an offshore/subsea structure monitoring system, (i.e.) the Riser Monitoring System (RMS), which is generally indicated by arrow 1.

An Input data Block 2 represents the data input for the system 1, which receives strain information from a strain gauge located on the offshore pipe and/or structure. Block 2 processes the received strain information to produce following attributes:

- the tension,
- bending moment; and
- heading (direction of bending) history of the riser.

Block 2 further comprises a rainflow counting algorithm for as is known in the art and commonly employed for strain gauge data from structures subjected to periodically varying forces where one or both of the amplitude and period also vary about a general norm. Accordingly one or more of the above attributes can be considered as cyclical or periodic. In a particularly preferred embodiment, the information might be represented in tabular form.

Input data block 2 passes, at 10, data to a processor block 9 which is in communication 13 with a pre-compiled bending moment variation matrix, generally indicated at block 15. Functional block 3 represents an extrapolation function, and as shown at 12A, said extrapolation function, in conjunction with processor block 9, interrogates, at 13, matrix 15, based on received data and determines, for a plurality of arbitrary points along the length of the monitored riser, a likely actual value of bending moment variation for a particular wave condition.

Information indicative of the bending moment variation at each point along the length of the riser system is then communicated, at 6, from the extrapolation block 3 to an enveloping functional block 5 wherein a determination occurs of a maximum bending moment variation value from within a determined envelope of bending moment variation values extracted from the bending moment variation table 15 when the depth of the riser beneath the surface of the sea in which it is disposed is not known. As shown, enveloping functional block 5 is in communication with the processing functional block 9, which again refers to the bending moment variation table 15 in determining the envelope of bending moment variations.

As indicated at 8, bending moment variation information is then communicated from the enveloping functional block 5 to a damage evaluation/accumulation functional block 7 and subjected to further processing, specifically firstly a Miner-Palmgren Function. The Miner-Palmgren Function translates the cycles of bending moment variation in to an equivalent damage per cycle, before functional block 7 then also aggregates the data, taking into account riser dimensions, cross-sectional shape, and known (or calculated) wave heading, to finally output via 14 to end functional block 16 a radial distribution of (likely) accumulated damage to the riser being monitored at a specific time for a plurality of points along said riser.

Further information for the offshore structure monitoring system, (i.e.) the Riser Monitoring System (RMS) is provided below:

The key elements of the Riser Monitoring system (RMS) are:

1. Input Data;
2. Extrapolation of known bending moment value to the rest of the riser;
3. Procedure for finding a bending moment profile;
4. Miner-Palmgren damage evaluation; and
5. Overall damage accumulation.

These key elements are described in detail below:

1. Input Data

Strain data from strain gauges .

O/P from gauges is CSV file comprising a date stamp for each set of readings.
Convert strain gauge readings to stress or the internal pipe forces.
Conversions use specific functions:

    i) Stress function
    ii) Force function
    Both function implemented by S/W application, such as MatLab.
    Forces function = to receive data in single block or single gauge vectors.

The input data is capable of compensating for a missing strain gauge, in case of failure when deployed.
Tension is calculated from the average of the four calculated stress values
Bending moment and heading values are then calculated using the difference of the individual calculated stresses from the average values. The mathematics can be seen below:

$$\sigma_N = \frac{T}{A} + \frac{Mr}{I}\sin\vartheta$$

$$\sigma_E = \frac{T}{A} - \frac{Mr}{I}\sin(90° - \vartheta) = \frac{T}{A} - \frac{Mr}{I}\cos\vartheta$$

$$\sigma_S = \frac{T}{A} - \frac{Mr}{I}\sin\vartheta$$

$$\sigma_W = \frac{T}{A} + \frac{Mr}{I}\sin(90° - \vartheta) = \frac{T}{A} + \frac{Mr}{I}\cos\vartheta$$

Where:

- $\sigma$'s, are the pipe stresses at the four strain gauge locations.
- T is the tension in the pipe at the strain gauge location.
- A is the cross sectional area of the pipe.
- M is the bending moment at the strain gauge location.
- I is the second moment of area of the pipe section.
- r is the outer radius of the pipe section.
- $\theta$ is the heading of the bending moment neutral axis.

Therefore

$$T = \frac{\sigma_N + \sigma_E + \sigma_S + \sigma_W}{4} = \frac{\sigma_N + \sigma_S}{2} = \frac{\sigma_E + \sigma_W}{2}$$

$$M = \frac{I}{2r}\sqrt{(\sigma_N - \sigma_S)^2 + (\sigma_W - \sigma_E)^2}$$

and

$$\vartheta = \tan^{-1}\left(\frac{\sigma_N - \sigma_S}{\sigma_W - \sigma_E}\right)$$

Applying the calculations to each data point in the time series will produce a time series consisting of the tension, bending moment, and heading (direction of bending) history of the riser.

A rain flow counting algorithm is used to evaluate the bending moment history and discretise the waves from a random distribution into a tabulated series of cyclically varying bending moment magnitudes. Tension, heading and wave period information is maintained for each physical surface wave which gives rise to the periodic forces to which the riser structure is subjected.

2. Extrapolation of known bending moment value to the rest of the riser.

The full range of regular wave conditions (wave height and period) to induce the bending moment variations observed within the tabulated series of bending moment magnitudes are imposed on a model within an industry standard software package for dynamic analysis of offshore marine structures. This software evaluates and outputs the bending moment variation at each point along the full length of the riser system for a particular wave condition. Cases for varying tension and wave depth are also evaluated

A six dimensional matrix is generated, comprising:

Bending moment variation
Wave height
Wave period
Arc Length (length along riser from fixed point)
Riser tension
Water depth

3. Procedure for finding a bending moment profile.

If water depth variation is temporarily set aside, a unique solution to translate bending moment variation from a single point (i.e., the monitoring point) on the riser, to any other point (arc length) can be obtained provided the following information is known:

The position of the monitoring point
The bending moment variation
The wave period of the excitation
Riser tension

The position of monitoring point is defined; the other three attributes are computed from the measured data.

Variation of water depth means that the computation does not have a unique solution. To circumvent this incompatibility the potential water depth variation cases are examined for each bending moment variation. A bending moment envelope for all other elevations (depths) of the riser is created from all the intersecting data/curves (intersecting at the specific bending moment, tension & wave period at the specific measurement point). The worst case (highest) bending moment is then employed as what might be termed a "unique transfer function".

4. Miner-Palmgren damage evaluation

A damage function is used to translate cycles of bending moment variation into equivalent damage per cycle (lifetime usage). This is developed using the structural properties of the components (material, dimensions and construction), the associated S-N curves from international standards and the industry standard Miner-Palmgren method of accumulating varying stress magnitudes into damage per cycle.

5. Overall damage accumulation

The discretised bending moment variation matrix (containing wave period and heading data, from 1.) is combined with the evaluated bending moment profile transfer function (from 3.) and the associated damage function (from 4.). This results in damage per cycle information along the full riser length for the monitored time history. The heading information is used to distribute the damage appropriately to the correct radial sector of the riser.

The result is an evaluation of accumulated damage (including radial distribution) for each component part of the riser pipe.

In an alternative not according to the invention, the monitoring system is housed within a pod, whereby the pod is subsequently attached to the offshore pipe and / or structure. The pod may also incorporate a data logger device, which logs the information indicative of wave conditions, bending moment variations observed and the fatigue damage incurred during the deployment of the offshore pipe and / or structure. The pod is periodically retrieved to facilitate the data retrieval from the pod. The pod may also comprise a Secure Digital (SD) memory card interface, which enables information from the RMS to be stored and subsequently removed or replaced to facilitate the data retrieval. The pod may also be powered by an internal battery device and will typically power the pod for the duration of its deployment, which is beyond the typical deployment duration of the offshore pipe and / or structure. Therefore the pod should be sufficiently powered by the internal battery for the deployment duration of the monitored offshore pipe and / or structure deployment, provided the internal battery device is recharged or replaced before each deployment of the pod. Or alternatively the pod may be powered via a power umbilical cord, which routes electrical power directly from an external electrical supply to the pod.

It is intended that the RMS will deployed on the offshore pipe and /or structure prior to its initial deployment, as this will provide an accurate record of fatigue damage acquired during the working life of the offshore pipe and/or structure. If the RMS system is retro fitted to an offshore pipe and/or structure, there will no record of the fatigue damage incurred prior to the instalment date of the RMS; therefore an accurate prediction of the life expectancy for the offshore pipe and/or structure cannot be made after each deployment.

In another alternative not according to the invention, multiple structure monitoring systems may be employed on a riser, offshore pipe or offshore structure to quantify the fatigue over the whole monitored component or structure. This configuration is particularly advantageous when the monitored component or structure comprises a complicated shape or configuration.

## Claims

1. A monitoring apparatus (1) for an elongate subsea structure, wherein the elongate subsea structure is a riser, the monitoring apparatus comprising: a strain gauge (2) secured to said elongate subsea structure at a defined location, and an information processing means (9) which is configured to receive signals communicated from said strain gauge being indicative of actual strain values experienced by said elongate subsea structure over time, said information processing means being **characterized in that** it comprises:

   - a pre-compiled discretised bending moment variation matrix (15) theoretically derived by computationally intensively analysing the response of a virtual model of said elongate subsea structure when subjected to wave-like forces of varying periods and amplitudes for different tensile loadings,
   - an extrapolation means (3) which utilises the discretised bending moment variation matrix in conjunction with said time-varying actual strain values or processed versions thereof and the known defined location of the apparatus relative to said structure to provide likely actual values for bending moment variation at a plurality of points along the length of said structure, and therefore provide an indication of the likely actual damage being or having been sustained at any of said plurality of points along said structure and remote from said defined location,
   wherein the information processing means (9) includes a tolerance of slight subsea depth variations in the defined location of the apparatus by utilizing the bending moment variation matrix to create an envelope (5) of possible bending moment variations at a particular point on the elongate subsea structure remote from the site of the monitoring apparatus by retrieving from the discretised bending moment variation matrix the calculated multiple possible values of likely actual bending moment variation occurring at said particular point when the number of known parameters for said particular point is lower than the dimension of said bending moment variation matrix, selecting the maximum bending moment variation value from that envelope of values, and providing this value as the likely actual bending moment variation value for the particular point.

2. The monitoring apparatus (1) of any preceding claim wherein the information processing means (9) further comprises damage identifying means for translating likely actual bending moment variation at any of a plurality of points along the length of the elongate subsea structure into an equivalent fatigue damage per cycle at any of said plurality of points.

3. The monitoring apparatus (1) of claim 2 wherein said information processing means (9) additionally comprises damage accumulation means (7) for aggregating the equivalent fatigue damage per cycle to provide information indicative sustained damage sustained by said elongate subsea structure over a monitored time duration.

4. A monitoring apparatus (1) according to any preceding claim wherein the pre-compiled discretised bending moment variation matrix (15) takes the form of a multidimensional matrix wherein:

- A first matrix dimension relates to wave time period;
- A second matrix dimension relates to wave height (amplitude);
- A third matrix dimension relates to bending moment variation;
- A fourth matrix dimension relates to elevation (subsea depth);
- A fifth matrix dimension relates to offshore pipe tension;
- A sixth matrix dimension relates to water depth.

5. A monitoring apparatus (1) according to claim 4 further including a seventh dimension relating to surface wave heading.

6. A monitoring apparatus (1) according to any preceding claim wherein the actual strain gauge signals communicated to the information processing apparatus are subjected to a rain flow counting algorithm.

7. A monitoring apparatus (1) according to claim 2 and any claim dependent thereon wherein said damage identifying means is a Miner-Palmgren algorithm.

8. A monitoring apparatus (1) according to claim 3 and any claim dependent thereon wherein the damage accumulation means (7) is provided with static dimensional data for the elongate subsea structure such that the output the damage accumulation means includes some indication of cross-sectional distribution of accumulated damage at any particular point along the length of the monitored structure.

9. A monitoring apparatus (1) according to claim 8 when additionally dependent on claim 5 wherein the output the damage accumulation means (7) includes some indication of radial distribution of accumulated damage at any point along the length of the monitored structure.

10. A monitoring apparatus (1) according to claim 3 and any claim dependent thereon wherein said extrapolation means, an enveloping means, a damage identifying means and damage accumulation means are computer program elements incorporated within one or more computer devices.

11. A monitoring apparatus (1) according to any preceding claim wherein said strain gauge consists of an array of four separate strain gauges arranged in quadrangular configuration.

12. A monitoring apparatus (1) according to any preceding claim including information storage means for storing the discretised bending moment variation matrix, wherein said information storage means is one or more of: volatile memory, non-volatile memory, removable memory, integrated memory, solid state memory or storage.

13. A method of monitoring an elongate subsea structure to determine the fatigue damage thereto, wherein the elongate subsea structure is a riser, the method comprising the steps of:

measuring strain values at the particular defined location on said structure and
communicating signals representative of those values to the information processing means (9);
in said information processing means (9):

converting said signals into values of a physical condition represented thereby and being experienced at said defined location on said structure, at a particular time, and creating a time-varying profile for said physical condition,
interrogating (13) a pre-compiled discretised bending moment variation matrix (15) theoretically derived by computationally intensively analysing the response of a virtual model of said elongate subsea structure when subjected to wave-like forces of varying periods and amplitudes for different tensile loadings,
using the pre-compiled discretised bending moment variation matrix, and the time-varying profile of the physical condition and the known defined location of the apparatus relative to said structure, extrapolating, for any particular point on said structure remote from the defined location at which the monitoring apparatus is sited, to determine a likely actual value for bending moment variation at that particular point, in order to provide an indication of the damage being or having been sustained at any of the said particular points on the monitored structure,

wherein the method includes the further step of creating an envelope of possible bending moment variations at said particular point by retrieving from the discretised bending moment variation matrix the multiple possible values of likely actual bending moment variation occurring at said particular point when the number of known parameters for said particular point is lower than the dimension of said bending moment variation matrix, selecting the maximum bending moment variation value from that envelope of values, and providing this value as the likely actual bending moment variation value for said particular point.

14. A method according to claim 13 including the further step of calculating an equivalent fatigue damage per cycle at any particular point along said elongate subsea structure by translating the likely actual bending moment value into a damage per cycle value.

15. A method according to claim 14 including the further step of aggregating the equivalent fatigue damage per cycle to provide information indicative of a damage sustained value for said elongate subsea structure over a monitored time duration.

**Patentansprüche**

1. Überwachungsvorrichtung (1) für eine längliche Unterwasserstruktur, wobei die längliche Unterwasserstruktur ein Steigrohr ist, wobei die Überwachungsvorrichtung umfasst: einen Dehnungsmessstreifen (2), der an der länglichen Unterwasserstruktur an einer definierten Stelle befestigt ist, und eine Informationsverarbeitungseinrichtung (9), die so konfiguriert ist, dass sie von dem Dehnungsmessstreifen übermittelte Signale empfängt, die tatsächliche Dehnungswerte anzeigen, die von der länglichen Unterwasserstruktur über die Zeit erfahren werden, wobei die Informationsverarbeitungseinrichtung **dadurch gekennzeichnet ist, dass** sie umfasst

- eine vorkompilierte diskretisierte Biegemomentvariationsmatrix (15), die theoretisch durch rechnerisch intensive Analyse der Reaktion eines virtuellen Modells der länglichen Unterwasserstruktur abgeleitet wurde, wenn sie wellenartigen Kräften unterschiedlicher Perioden und Amplituden für verschiedene Zugbelastungen ausgesetzt wird,
- eine Extrapolationseinrichtung (3), die die diskretisierte Biegemomentvariationsmatrix in Verbindung mit den zeitveränderlichen tatsächlichen Dehnungswerten oder verarbeiteten Versionen davon und der bekannten definierten Stelle der Vorrichtung relativ zu der Struktur verwendet, um wahrscheinliche tatsächliche Werte für die Biegemomentvariation an einer Vielzahl von Punkten entlang der Länge der Struktur bereitzustellen und daher eine Anzeige des wahrscheinlichen tatsächlichen Schadens bereitzustellen, der an irgendeinem der Vielzahl von Punkten entlang der Struktur und entfernt von der definierten Stelle auftritt oder aufgetreten ist, wobei die Informationsverarbeitungseinrichtung (9) eine Toleranz geringfügiger Variationen der Unterwassertiefe an der definierten Stelle der Vorrichtung unter Verwendung der Biegemomentvariationsmatrix einschließt, um eine Einhüllende (5) möglicher Biegemomentvariationen an einem bestimmten Punkt auf der länglichen Unterwasserstruktur entfernt von der Stelle der Überwachungsvorrichtung zu erzeugen, indem aus der diskretisierten Biegemomentvariationsmatrix die berechneten mehreren möglichen Werte der wahrscheinlichen tatsächlichen Biegemomentvariation, die an dem bestimmten Punkt auftritt, wenn die Anzahl der bekannten Parameter für den bestimmten Punkt geringer ist als die Abmessung der Biegemomentvariationsmatrix, abgerufen werden, indem der maximale Biegemomentvariationswert aus dieser Einhüllenden von Werten ausgewählt wird und indem dieser Wert als der wahrscheinliche tatsächliche Biegemomentvariationswert für den bestimmten Punkt bereitgestellt wird.

2. Überwachungsvorrichtung (1) nach einem der vorhergehenden Ansprüche, wobei die Informationsverarbeitungseinrichtung (9) ferner eine Schadensidentifizierungseinrichtung umfaßt, um eine wahrscheinliche tatsächliche Biegemomentvariation an irgendeinem einer Vielzahl von Punkten entlang der Länge der länglichen Unterwasserstruktur in einer äquivalenten Ermüdungsschädigung pro Zyklus an irgendeinem der Vielzahl von Punkten zu übersetzen.

3. Überwachungsvorrichtung (1) nach Anspruch 2, wobei die Informationsverarbeitungseinrichtung (9) umfasst zusätzlich Schadensakkumulationsmittel (7) zum Aggregieren der äquivalenten Ermüdungsschädigung pro Zyklus, um Informationen zu liefern, die auf einen anhaltenden Schaden hinweisen, der von der länglichen Unterwasserstruktur über eine überwachte Zeitdauer erlitten wurde.

4. Überwachungsvorrichtung (1) nach einem der vorhergehenden Ansprüche, wobei die vorkompilierte diskretisierte Biegemomentvariationsmatrix (15) die Form einer mehrdimensionalen Matrix annimmt, wobei:

• Eine erste Matrixdimension bezieht sich auf die Wellenzeitperiode;
• Eine zweite Matrixdimension bezieht sich auf die Wellenhöhe (Amplitude);
• Eine dritte Matrixdimension bezieht sich auf die Biegemomentvariation;
• Eine vierte Matrixdimension bezieht sich auf die Höhe (Unterwassertiefe);
• Eine fünfte Matrixdimension bezieht sich auf die Offshore-Rohrspannung;
• Eine sechste Matrixdimension bezieht sich auf die Wassertiefe.

5. Überwachungsvorrichtung (1) nach Anspruch 4, das ferner eine siebte Dimension in Bezug auf den Oberflächenwellenkurs enthält.

6. Überwachungsvorrichtung (1) nach einem der vorhergehenden Ansprüche, bei der die tatsächlichen Dehnungsmessstreifen-Signale, die an die Informationsverarbeitungsvorrichtung übermittelt werden, einem Algorithmus zum Zählen des Regenflusses unterworfen werden.

7. Überwachungsvorrichtung (1) nach Anspruch 2 und jedem davon abhängigen Anspruch, wobei das Mittel zur Schadensidentifizierung ein Miner-Palmgren-Algorithmus ist.

8. Überwachungsvorrichtung (1) nach Anspruch 3 und jedem davon abhängigen Anspruch, wobei die Schadensakkumulationseinrichtung (7) mit statischen Abmessungsdaten für die längliche Unterwasserstruktur versehen ist, so dass die Ausgabe der Schadensakkumulationseinrichtung eine gewisse Angabe der Querschnittsverteilung des akkumulierten Schadens an einem bestimmten Punkt entlang der Länge der überwachten Struktur enthält.

9. Überwachungsvorrichtung (1) nach Anspruch 8, wenn sie zusätzlich von Anspruch 5 abhängig ist, wobei die Ausgabe der Schadensakkumulationseinrichtung (7) eine gewisse Angabe der radiale Verteilung des akkumulierten Schadens an jedem Punkt entlang der Länge der überwachten Struktur enthält.

10. Überwachungsvorrichtung (1) nach Anspruch 3 und jedem davon abhängigen Anspruch, wobei die Extrapolationsmittel, ein Einhüllungsmittel, ein Schadensidentifizierungsmittel und ein Schadensakkumulationseinrichtung Computerprogrammelemente sind, die in einem oder mehreren Computergeräten enthalten sind.

11. Überwachungsvorrichtung (1) nach einem der vorhergehenden Ansprüche, wobei der Dehnungsmeßstreifen aus einer Anordnung von vier separaten Dehnungsmeßstreifen besteht, die in viereckiger Konfiguration angeordnet sind.

12. Überwachungsvorrichtung (1) nach irgendeinem vorhergehenden Anspruch mit einer Informationsspeichereinrichtung zum Speichern der diskretisierten Biegemomentvariationsmatrix, wobei die Informationsspeichereinrichtung eine oder mehrere der folgenden Einrichtungen ist: flüchtiger Speicher, nichtflüchtiger Speicher, austauschbarer Speicher, integrierter Speicher, Festkörperspeicher oder -speicherung.

13. Verfahren zum Überwachen einer länglichen Unterwasserstruktur, um den Ermüdungsschaden daran zu bestimmen, wobei die längliche Unterwasserstruktur ein Steigrohr ist, wobei das Verfahren die folgenden Schritte umfasst:

Messen von Dehnungswerten an der bestimmten definierten Stelle der Struktur und
Übermittlung von Signalen, die für diese Werte repräsentativ sind, an die Informationsverarbeitungseinrichtung (9):
in der genannten Informationsverarbeitungseinrichtung (9):

Umwandeln der Signale in Werte eines dadurch repräsentierten physikalischen Zustands, der an der definierten Stelle auf der Struktur zu einem bestimmten Zeitpunkt erfahren wird, und
Erzeugen eines zeitlich veränderlichen Profils für den physikalischen Zustand,
Abfragen (13) einer vorkompilierten diskretisierten Biegemomentvariationsmatrix (15), die theoretisch durch rechenintensive Analyse der Reaktion eines virtuellen Modells der länglichen Unterwasserstruktur abgeleitet wurde, wenn sie wellenartigen Kräften unterschiedlicher Perioden und Amplituden für verschiedene Zugbelastungen ausgesetzt wird,
Verwenden die vorkompilierte diskretisierte Biegemomentvariationsmatrix und des zeitveränderlichen Profils des physikalischen Zustands und bekannten definierten Stelle der Vorrichtung relativ zu der genannten Struktur, durch Extrapolation, für jeden bestimmten Punkt auf der genannten Struktur, der von dem definierten Standort, an dem die Überwachungsvorrichtung angeordnet ist, entfernt ist, um einen wahrscheinlichen tatsächlichen Wert für die Biegemomentvariation an diesem bestimmten Punkt zu bestimmen, um einen Hinweis auf den Schaden zu liefern, der an einem der genannten bestimmten Punkte auf der überwachten Struktur vorliegt oder erlitten wurde,

wobei das Verfahren den weiteren Schritt umfaßt des Erzeugens einer Einhüllenden möglicher Biegemomentvariationen an dem bestimmten Punkt durch Abrufen aus der diskretisierten Biegemomentvariationsmatrix der mehreren möglichen Werte der wahrscheinlichen tatsächlichen Biegemomentvariation, die an dem bestimmten Punkt auftritt,
wenn die Anzahl bekannter Parameter für den bestimmten Punkt geringer ist als die Abmessung der Biegemomentvariationsmatrix, durch Auswählen des maximalen Biegemomentvariationswertes aus dieser Einhüllenden von Werten und durch Bereitstellen dieses Wertes als den wahrscheinlichen tatsächlichen Biegemomentvariationswert für den bestimmten Punkt.

14. Verfahren nach Anspruch 13 einschließlich des weiteren Schritts der Berechnung einer äquivalenten Ermüdungsschädigung pro Zyklus an irgendeinem bestimmten Punkt entlang der länglichen Unterwasserstruktur durch Übersetzen des wahrscheinlichen tatsächlichen Biegemomentwerts in einen Wert der Schädigung pro Zyklus.

15. Verfahren nach Anspruch 14 einschließlich des weiteren Schritts der Aggregation der äquivalenten Ermüdungsschädigung pro Zyklus, um Informationen zu liefern, die einen Wert des erlittenen Schadens für die längliche Unterwasserstruktur über eine überwachte Zeitdauer anzeigen.

**Revendications**

1. Appareil de surveillance (1) pour une structure sous-marine allongée, dans lequel la structure sous-marine allongée est une colonne montante, l'appareil de surveillance comprenant : une jauge de contrainte (2) fixée à ladite structure sous-marine allongée à un emplacement défini, et un moyen de traitement d'informations (9) qui est configuré pour recevoir des signaux communiqués par ladite jauge de contrainte qui sont indicatifs de valeurs de contrainte réelles subies par ladite structure sous-marine allongée au cours du temps, ledit moyen de traitement d'informations étant **caractérisé en ce qu'**il comprend :

   - une matrice discrétisée précompilée de variation du moment de flexion (15) dérivée théoriquement par l'analyse informatique intensive de la réponse d'un modèle virtuel de ladite structure sous-marine allongée lorsqu'elle est soumise à des forces ondulatoires de périodes et d'amplitudes variables pour différentes charges de traction,
   - un moyen d'extrapolation (3) qui utilise la matrice discrétisée de variation du moment de flexion en conjonction avec lesdites valeurs réelles de contrainte variant dans le temps ou des versions traitées de celles-ci et l'emplacement défini connu de l'appareil par rapport à ladite structure pour fournir des valeurs réelles probables pour la variation du moment de flexion en une pluralité de points sur la longueur de ladite structure, et donc fournir une indication du dommage réel probable qui est ou a été subi à l'un quelconque de ladite pluralité de points le long de ladite structure et éloigné dudit emplacement défini,
   dans lequel le moyen de traitement d'informations (9) comprend une tolérance de légères variations de la profondeur sous-marine à l'emplacement défini de l'appareil en utilisant la matrice de variation du moment de flexion pour créer une enveloppe (5) de variations possibles du moment de flexion à un point particulier de la structure sous-marine allongée éloignée du site de l'appareil de surveillance en récupérant de la matrice de variation du moment de flexion discrétisée les multiples valeurs possibles calculées de la variation réelle probable du moment de flexion se produisant audit point particulier lorsque le nombre de paramètres connus pour ledit point particulier est inférieur à la dimension de ladite matrice de variation du moment de flexion, en sélectionnant la valeur maximale de variation du moment de flexion à partir de cette enveloppe de valeurs, et en fournissant cette valeur comme la valeur de variation réelle probable du moment de flexion pour le point particulier.

2. Appareil de surveillance (1) selon l'une quelconque des revendications précédentes dans lequel le moyen de traitement d'informations (9) comprend en outre un moyen d'identification des dommages pour traduire la variation probable du moment de flexion réel à l'un quelconque d'une pluralité de points sur la longueur de la structure sous-marine allongée en un dommage de fatigue équivalent par cycle à l'un quelconque de ladite pluralité de points.

3. Appareil de surveillance (1) de la revendication 2 dans lequel ledit moyen de traitement d'informations (9) comprend en outre un moyen d'accumulation des dommages (7) pour agréger les dommages de fatigue équivalents par cycle afin de fournir des informations indiquant les dommages subis par ladite structure sous-marine allongée sur une durée surveillée.

**4.** Appareil de surveillance (1) selon l'une quelconque des revendications précédentes, dans lequel la matrice discrétisée précompilée de variation du moment de flexion (15) prend la forme d'une matrice multidimensionnelle dans laquelle :

- Une première dimension matricielle concerne la période de temps de vague ;
- Une deuxième dimension de la matrice concerne la hauteur des vagues (amplitude) ;
- Une troisième dimension de la matrice concerne la variation du moment de flexion ;
- Une quatrième dimension de la matrice concerne l'altitude (profondeur sous-marine) ;
- Une cinquième dimension de la matrice concerne la tension des conduites en mer ;
- Une sixième dimension de la matrice concerne la profondeur de l'eau.

**5.** Appareil de surveillance (1) selon la revendication 4, comprenant en outre une septième dimension relative au cap des ondes de surface.

**6.** Appareil de surveillance (1) selon l'une des revendications précédentes, dans lequel les signaux réels de jauge de contrainte communiqués à l'appareil de traitement d'informations sont soumis à un algorithme de comptage du débit de pluie.

**7.** Appareil de surveillance (1) selon la revendication 2 et toute revendication qui en dépend, dans lequel ledit moyen d'identification des dommages est un algorithme de Miner-Palmgren.

**8.** Appareil de surveillance (1) selon la revendication 3 et toute revendication qui en dépend, dans lequel le moyen d'accumulation des dommages (7) est fourni avec des données dimensionnelles statiques pour la structure sous-marine allongée de telle sorte que la sortie du moyen d'accumulation des dommages comprend une certaine indication de la distribution en section transversale des dommages accumulés à tout point particulier sur la longueur de la structure surveillée.

**9.** Appareil de surveillance (1) selon la revendication 8 lorsqu'il dépend en outre de la revendication 5, dans lequel la sortie du moyen d'accumulation des dommages (7) comprend une certaine indication de la distribution radiale des dommages accumulés à tout point sur la longueur de la structure surveillée.

**10.** Appareil de surveillance (1) selon la revendication 3 et toute revendication qui en dépend, dans lequel lesdits moyens d'extrapolation, un moyen d'enveloppement, un moyen d'identification des dommages et un moyen d'accumulation des dommages sont des éléments de programme informatique incorporés dans un ou plusieurs dispositifs informatiques.

**11.** Appareil de surveillance (1) selon l'une quelconque des revendications précédentes, dans lequel ladite jauge de contrainte consiste en un réseau de quatre jauges de contrainte séparées disposées en configuration quadrangulaire.

**12.** Appareil de surveillance (1) selon l'une quelconque des revendications précédentes, comprenant un moyen de stockage d'informations pour stocker la matrice discrétisée de variation du moment de flexion, dans lequel ledit moyen de stockage d'informations est un ou plusieurs des éléments suivants : mémoire volatile, mémoire non volatile, mémoire amovible, mémoire intégrée, mémoire ou stockage à semi-conducteur.

**13.** Procédé de surveillance d'une structure sous-marine allongée pour déterminer les dommages de fatigue qu'elle subit, dans lequel la structure sous-marine allongée est une colonne montante, le procédé comprenant les étapes de :

- mesurer les valeurs de contrainte à l'emplacement particulier défini sur ladite structure et communiquer les signaux représentatifs de ces valeurs aux moyens de traitement d'informations (9) :
dans lesdits moyens de traitement d'informations (9) :

- la conversion desdits signaux en valeurs d'une condition physique représentée par ceux-ci et subie audit emplacement défini sur ladite structure, à un moment particulier, et la création d'un profil variant dans le temps pour ladite condition physique,
- l'interrogation (13) d'une matrice de variation du moment de flexion discrétisée précompilée (15) dérivée théoriquement par l'analyse informatique intensive de la réponse d'un modèle virtuel de ladite structure sous-marine allongée lorsqu'elle est soumise à des forces ondulatoires de périodes et d'amplitudes variables pour différentes charges de traction,

- l'utilisation de la matrice discrétisée précompilée de variation du moment de flexion, et le profil temporel variable de l'état physique et de l'emplacement défini connu de l'appareil par rapport à ladite structure, en extrapolant, pour tout point particulier de ladite structure éloigné de l'emplacement défini où est situé l'appareil de surveillance, pour déterminer une valeur réelle probable de variation du moment de flexion à ce point particulier, afin de fournir une indication du dommage qui est ou a été subi à l'un quelconque desdits points particuliers de la structure surveillée,

dans lequel le procédé comprend l'étape supplémentaire consistant à créer une enveloppe de variations possibles du moment de flexion audit point particulier en extrayant de la matrice discrétisée de variation du moment de flexion les multiples valeurs possibles de la variation réelle probable du moment de flexion se produisant audit point particulier lorsque le nombre de paramètres connus pour ledit point particulier est inférieur à la dimension de ladite matrice de variation du moment de flexion, à sélectionner la valeur maximale de variation du moment de flexion à partir de cette enveloppe de valeurs, et à fournir cette valeur en tant que valeur de variation réelle probable du moment de flexion pour ledit point particulier.

14. Méthode selon la revendication 13, comprenant l'étape supplémentaire consistant à calculer un dommage de fatigue équivalent par cycle à tout point particulier le long de ladite structure sous-marine allongée en traduisant la valeur réelle probable du moment de flexion en une valeur de dommage par cycle.

15. Méthode selon la revendication 14, comprenant l'étape supplémentaire consistant à agréger les dommages de fatigue équivalents par cycle afin de fournir des informations indiquant une valeur de dommage subi pour ladite structure sous-marine allongée sur une durée contrôlée.

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005103123 A
- US 2007193363 A1
- US 2011088910 A